# EUROPEAN PATENT APPLICATION

(11) **EP 4 553 756 A1**
(43) Date of publication of application: **14.05.2025**
(21) Application number: 23835236.3
(22) Date of filing: 13.06.2023
(51) Int. Cl.: G06T 5/00, G06T 1/00, G06T 5/20

(54) **IMAGE PROCESSING METHOD**

(30) Priority: 07.07.2022 JP 2022109503; 09.02.2023 JP 2023018255
(71) Applicant: Logic and Design Co., Ltd., Tokyo 160-0004 (JP)
(72) Inventor: KOBAYASHI Masahiro, Tokyo 160-0004 (JP)
(74) Representative: Dehns
(86) International application number: PCT/JP2023/021841
(87) International publication number: WO 2024/009700

(57) **Abstract**

[Problem] To provide an image processing method for visualizing fine irregularities of a lower layer section covered by blood.

[Solution] An image processing method includes converting an original image to RGB color space, converting the image converted to the RGB color space to grayscale by determining weights for red, yellow, green, cyan, blue, and magenta hues, using a red-enhancing filter to enhance a luminance ratio of a red region of a black-and-white image when converting to the grayscale, converting the original image to YUV color space, YCbCr color space, or YPbPr color space, replacing a luminance of the red region of the black-and-white image that has been brightened using the red-enhancing filter with a luminance of the red region of the YUV color space, the YCbCr color space, or the YPbPr color space of the original image, and equalizing the contrast to return a gradation that has been expanded to a natural brightness range.

## Description

### CROSS-REFERENCE TO RELATED APPLICATIONS

This application is a U.S National Stage application of International Application No. PCT/JP2023/21841, filed on June 15, 2023, which claims priority to Japanese Application No. 2022-109503, filed on July 7, 2022, and Japanese Application No. 2022-018255, filed on February 9, 2023, the contents of each of which are herein incorporated by reference.

### Technical Field

The present disclosure relates to an image processing method for visualizing fine irregularities in underlying portions covered with blood, for example.

### Background Information

Brightness and contrast of images are enhanced in accordance with the purpose of use, and the like. For example, WO2018-235179 discloses an image processing device for discovering blood vessels or bleeding sites at the time of endoscopic surgery, for example.

Specifically, an image acquisition unit for acquiring a captured image which includes an image of an imaging subject obtained by emitting illuminating light from a light source unit at the imaging subject, a visibility emphasis unit for performing processing so as to increase the visibility of a yellow region of the captured image relative to the non-yellow region of the captured image, a detection unit for detecting a blood region, which is the region where blood is present in the captured image, on the basis of color information of the captured image, and a notification processing unit for performing notification processing about the blood region on the basis of the detection results from the detection unit, are disclosed.

Japanese Laid-Open Patent Publication No. 2020-99014 lists the following adjustment parameters: brightness, saturation, red enhancement, skin tone correction, contrast, and scratch noise addition, in which an image of autumn leaves is used as an example of setting the red enhancement, and an image of an aurora is used as an example of increasing brightness.

Kohyo 2020-508713 discloses, as a vascular system imaging method, a display enhancement method for differentially highlighting displays, in which veins are highlighted red and arteries are highlighted blue, in order to distinguish between pixels representing the venous vascular system and pixels representing arterial vascular system.

Japanese Laid-Open Patent Publication No. 2014-50453 discloses an image processing method for endoscopic images. In this image processing method, an image is divided into a first area in which oxygen saturation exceeds a set value and a second area in which oxygen saturation is lower than the set value, a color balance processing is carried out on the first area, a gain processing for changing the color is carried out on the second area, and a red enhancement processing for enhancing the red components is carried out as the color balance processing.

WO202-031502 discloses using an optical lens having red-enhancing polarizing properties with an integrated polarizing filter to facilitate identification of bleeding regions and finding locations of micro-bleeding.

### SUMMARY

While WO2018-235179 discloses a process for increasing luminance and saturation of the color of blood vessel regions, it is for the purpose of making it easier to see locations of bleeding and blood vessels rather than for clarifying underlying portions that are difficult to see due to blood (underlying portions covered with blood), as in the present disclosure. Therefore, WO2018-235179 does not disclose a process therefor, i.e., a process for expanding the gradation of red regions to make the red color lighter and to increase the contrast.

Japanese Laid-Open Patent Publication No. 2020-99014, Kohyo 2020-508713, Japanese Laid-Open Patent Publication No. 2014-50453, and WO202-031502 also relate to a processes for making red portions more conspicuous compared with other portions, and are not for visualizing images of portions below blood that are hidden by the blood (red portions).

That is, one advantage of the present disclosure is to carry out a process, not for enhancing the red, but rather to eliminate the red, which is not disclosed in any of the patent documents.

Rather than making portions with a particular color, such as red, more conspicuous than the other portions, one aspect of the present disclosure is for eliminating detrimental impact of the red color and making the underlying portions thereof visible. For this purpose, an image processing method according to the present disclosure comprises converting an original image to RGB color space, carrying out filtering and monochrome conversion for each pixel of the image converted to the RGB color space to generate a gray plane, and using a color-enhancing filter when generating this gray plane to increase the luminance ratio (Y1) only for regions with a specific hue. Furthermore, the original image is converted to the YUV color space, the YCbCr color space, or the YPbPr color space, luminance (Y) is compared between this converted image and the gray plane for each pixel and the higher (brighter) one is adopted to create a color image, and this color image is subjected to a sharpening process.

When the purpose is to visualize fine irregularities of underlying portions covered with blood, a red-enhancing filter is used as the color-enhancing filter, to increase the luminance ratio (Y1) only for regions having a red hue similar to that of blood.

In addition, it is conceivable to bring the color enhancement of a specific color using a color-enhancing filter closer to white by increasing the luminance of said specific color.

One effect of the disclosure, according to the image processing method of the present disclosure, is that underlying portions covered with blood, such as during surgery, can be visualized, so it is possible to carry out surgery while checking locations of small irregularities and lesions, thereby increasing safety.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.
Figure 1 is an original image with bleeding.
Figure 2 is a black-and-white image of the original image with bleeding.
Figure 3 is a black-and-white image in which luminance of red regions of the original image with bleeding has been increased.
Figure 4 is a color image obtained by compositing a luminance signal (Y1) that has been replaced, the difference (U) between the luminance signal and the blue component, and the difference (V) between the luminance signal and the red component.
Figure 5 is an image in which a sharpening process is carried out on the composited color image.

### DETAILED DESCRIPTION

An embodiment of the present disclosure will be described below with reference to the appended drawings.

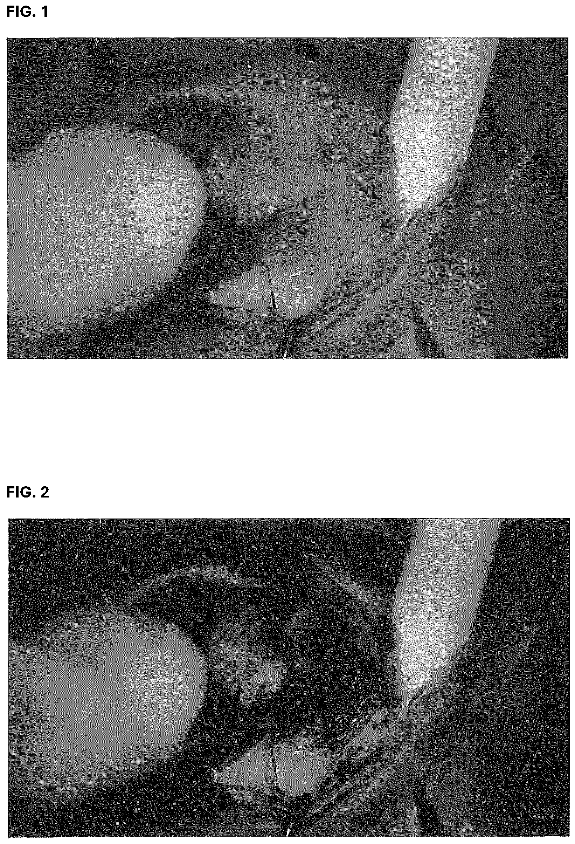

Figure 1 is an original image with bleeding; as can be seen from this image, it is not possible to see what underlying portions covered with blood look like.

Figure 2 is a black-and-white image obtained by converting the original image to the RGB color space, which is then filtered and subjected to monochrome conversion, in which red has high saturation but low luminance, and thus is dark. That is, it can be seen that the reason why the underlying portion covered with blood is not visible is because the luminance is low.

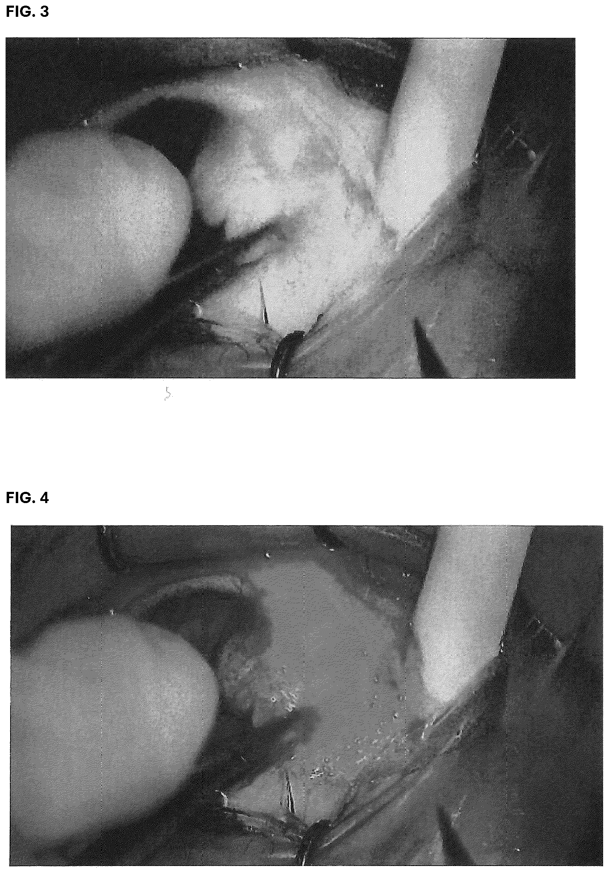

Therefore, as shown in Figure 3, regions of the original image with a red hue (bleeding regions) are brightened using a red-enhancing filter to create a black-and-white image (luminance ratio: Y1).

In the filtering and monochrome conversion process, the image is converted from the RGB image to grayscale by determining weights for each of red (R), yellow (Ye), green (G), cyan (C), blue (B), and magenta (M) hues.

When the weights for each hue are Rf (red), Yef (yellow), Gf (green), Cf (cyan), Bf (blue), and Mf (magenta), Rf=100%, Yef =60%, Gf=40%s, Cf= 60%, Bf= 20%s, and Mf= 80% in this embodiment. Incidentally, the luminance sensitivity of humans to the red color as expressed on the hue circle is Rf=40%.

A negative ratio can be specified for f above to weaken a specific color.

The following calculation is carried out using Y as the black and white value (luminance ratio) of a pixel having R, G, and B values.

Here, max is the maximum value among RGB, mid is the value neither maximum nor minimum among RGB, and min is the minimum value among RGB. However, if there are equal values, mid will be equal to either max or min.

| | |
|---|---|
| (1) When max==mid==min, use that value as Y and end the calculation. | |
| (2) Start with Y = 0 | |
| (3) When max==R | Y+ = Rf•(max-mid) |
| (4) When max==B | Y+ = Yef•(max-mid) |
| (5) When max==G | Y+ = Gf•(max-mid) |
| (6) When min==R | Y+ = Cf•(max-mid) |
| (7) When min==B | Y+ = Bf•(max-mid) |
| (8) When min==G | Y+ = Mf•(max-mid) |
| (9) Two of (3) to (8) must be true (three, if there are equal values) | |
| (10) Y+ = min | |
| (11) If Y > 255 then Y = 255 | |
| (12) If Y < 0 then Y = 0 | |

For example, while the luminance ratio of red as expressed on a hue circle is 40%, this luminance ratio is multiplied by 2.5 to make it 100%. When the red luminance ratio is converted to 100%, red regions in the original image that are composed of black to red gradations are converted into wider gradations ranging from black to red to white. By converting the red regions to wider gradations, it can be seen that subtle variations in light and dark become move visible as compared with Figure 2, even though both are black-and-white photographs.

In the present disclosure, the multiplier of the red luminance ratio described above is an adjustable parameter that is not limited to 2.5×, and can be 2.0×, or the like

If there is a large amount of blue components, such as veins, the multiplier of magenta (M) can be varied in addition to that of red (R) to adjust for differences in the hues of the blood image. In this manner, the multipliers for red (R), yellow (Ye), green (G), cyan (C), blue (B), and magenta (M) can be set to multipliers corresponding to the targeted hues, to make regions with a given hue transparent.

Next, the luminance ratio (Y1) of the red region of the black-and-white image that has been brightened using the red-enhancing filter is replaced with the luminance (Y) of the red region of the YUV color space, the YCbCr color space, or the YPbPr color space of the original image. That is, the luminance ratio (Y) of the red region of the original image is multiplied by 2.5. Figure 4 shows a color image created by compositing this replaced luminance ratio (Y) with the UV, CbCr, or PbPr of the original image.

As shown in Figure 4, by increasing the brightness of the red region, the portions that were dark in the original image become brighter and have a wider gradation range, making the irregularities of the portions below the blood visible. However, at the same time, red appears fluorescent at the boundaries of the red regions.

What causes the foregoing is that, if an image is separated into YUV and the Y (luminance) is brightened (for example, by 2.5 times) only in the red regions using a red-enhancing filter, regions that originally ranged from black to pure red now contain a wider tonal range that extends from black through red and includes pink with white, resulting in a fluorescent appearance with bright pink tints. This can lead to missing small irregularities and lesions.

In order to resolve the problem described above, the expanded gradation is returned to a natural brightness range. Specifically, PN. 6867563, PN. 6893068, CLAHE, LISr (registered trademark), or the like is used to carry out a sharpening process that adaptively equalizes contrast.

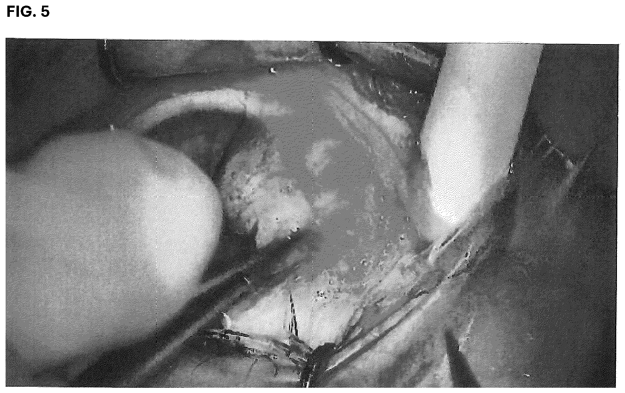

Figure 5 is a color image in which the sharpening process has been completed; compared with the original image, it can be seen that irregularities of the portions covered with blood have become visible.

Visualization of portions covered with blood during surgery by increasing the luminance ratio and expanding the gradation of the red region was described in the embodiment, but the luminance ratio of regions other than red can be increased. In particular, the present disclosure can be used to clarify underlying portions of image regions that have high saturation and low brightness.

## Claims

1. An image processing method, comprising the following steps:
(1) converting an original image to RGB color space;
(2) converting the image converted to the RGB color space to grayscale by determining weights for R(red), Ye(yellow), G(green), C(cyan), B(blue), and M(magenta) hues;
(3) using a red-enhancing filter to enhance a luminance ratio (Y1) of a red region of a black-and-white image when converting to the grayscale;
(4) converting the original image to YUV color space, YCbCr color space, or YPbPr color space;
(5) replacing a luminance of the red region of the black-and-white image that has been brightened using the red-enhancing filter with a luminance (Y) of the red region of the YUV color space, the YCbCr color space, or the YPbPr color space of the original image; and
(6) equalizing the contrast to return a gradation that has been expanded to a natural brightness range.
